# EUROPÄISCHE PATENTSCHRIFT

(11) **EP 0 713 793 B1**
(45) Veröffentlichungstag und Bekanntmachung des Hinweises auf die Patenterteilung: **21.01.1998**
(21) Anmeldenummer: 95116152.0
(22) Anmeldetag: 13.10.1995
(51) Int. Cl.: B60J 3/02

(54) **Lagerböckchen für Fahrzeugsonnenblenden**
Bearing support for vehicle sun visor
Support de palier d'un pare-soleil pour véhicules

(30) Priorität: 26.11.1994 DE 4442133
(43) Veröffentlichungstag der Anmeldung: 29.05.1996
(73) Patentinhaber: BECKER GROUP EUROPE GmbH, 42285 Wuppertal (DE)
(72) Erfinder: Grisval, Benoit, F-88240 Bains Les Bains (FR)

(56) Entgegenhaltungen:
- EP-A- 0 005 146
- DE-A- 2 803 731
- DE-C- 3 523 135
- DE-C- 4 028 939
- DE-C- 4 302 919
- DE-U- 7 717 139

## Beschreibung

Die Erfindung bezieht sich auf ein Lagerböckchen für Fahrzeugsonnenblenden, welches zwei eine Sonnenblendenachse klammerartig umgreifende Arme aufweist, deren einander zugewandten Seiten eine hinterschnittene Lageröffnung für die Sonnenblendenachse und einen deren wiederholtes Einstecken in die Lageröffnung ermöglichenden Einführschlitz bilden, wobei der erste Arm an einem Grundkörper und der zweite Arm an einem damit über ein Befestigungselement verbundenen Ergänzungskörper ausgebildet ist und wobei sich zwischen dem Grundkörper und dem Ergänzungskörper, die gemeinsam das Lagerböckchen bilden, eine Feder befindet.

Derartige Lagerböckchen dienen für Sonnenblenden, die sowohl klappbar vor der Frontscheibe von Fahrzeugen gelagert sind, als auch über ein Schwenklager zur Seitenscheibe hin verschwenkt werden können und werden im allgemeinen als Fang- oder Gegenlager bezeichnet, weil sie die Sonnenblendenachse an dem dem Schwenklager abgewandten Endbereich lagern, wenn sich der Sonnenblendenkörper vor der Frontscheibe befindet. Die bekannten Lagerböckchen sind (vgl. die Unterlagen des DE-U-77 17 139) relativ starr ausgebildet und besitzen den Nachteil, daß sie bei niedrigen Temperaturen funktionsuntüchtig werden, weil sich dann nämlich die Sonnenblendenachse nicht oder nur unter erhöhtem Kraftaufwand aus der Lageröffnung herausziehen läßt. Beim Herausziehen der Lagerachse mit relativ großem Kraftaufwand besteht die Gefahr, daß die Folien, mit der die Lagerachse im Gegenlagerbereich im allgemeinen verkleidet ist, beschädigt wird. Andererseits hat sich bei den bekannten lagerböckchen gezeigt, daß sie bei relativ großer Wärme eine nur geringe Standfestigkeit besitzen.

Um die geschilderten Schwierigkeiten auszuschalten, ist bei einem Lagerböckchen der durch die DE 28 03 731 C2 bekanntgewordenen Art vorgesehen, daß der der Anlageebene benachbarte Arm zumindest eine federelastisch in Richtung zur Anlageebene verschwenkbare Federzunge aufweist. Obgleich sich dieses Lagerböckchen in der Praxis an sich hervorragend bewährt hat, besteht ein Verbesserungsbedürfnis, insbesondere in bezug auf die Haltekraft der Arme bei besonders hohen Temperaturen.

Aus der DE 43 02 919 C1 geht ein Lagerböckchen für Fahrzeugsonnenblenden hervor, welches einen an einer Karosseriefläche befestigbaren Lagerkörper aufweist. Zwischen einem Arm am Lagerkörper und dem Lagerkörper selbst ist ein Einführungsschlitz für die Gegenlagerachse gebildet. Um eine zum Einführungsschlitz beabstandete Achse ist ein Verriegelungselement für die Gegenlagerachse zwischen einer Verriegelungs- und einer Entriegelungsstellung schwenkbar gelagert. Am Verriegelungselement ist ein Verriegelungsvorsprung vorgesehen, welcher den Einführungsschlitz in der Verriegelungsstellung wenigstens bereichsweise verschließt und die Gegenlagerachse in der Entriegelungsstellung freigibt.

Schließlich zeigt die DE-C-3 523 135 ein Lagerböckchen der eingangs näher erwähnten Art, wobei sich zwischen einem Grundkörper und einem Ergänzungskörper, die gemeinsam das Lagerböckchen bilden, eine Feder befindet. Bei diesem Lagerböckchen wird die Klemmkraft für die Sonnenblendenachse nicht allein durch die hinterschnittene Lageröffnung, sondern ebenfalls mittels der erwähnten Feder aufgebracht. Dafür weist einer der die Sonnenblendenachse klammerartig umgreifenden Arme ein Fenster für den Durchtritt der unmittelbar an der Sonnenblendenachse angreifenden Feder auf.

Der vorliegenden Erfindung liegt die Aufgabe zugrunde, ein Lagerböckchen der eingangs genannten Art nach der DE-C-3 523 135 zu schaffen, das sich durch eine hohe Leistungsfähigkeit, insbesondere auch bei höheren Temperaturen auszeichnen soll, wobei weiterhin angestrebt wird, die Verbindung zwischen dem Grundkörper und dem Ergänzungskörper unter Zuhilfenahme der Feder zu sichern.

Zur Lösung dieser Aufgabe ist erfindungsgemäß vorgesehen, daß der Grundkörper eine Stecköffnung für den Ergänzungskörper aufweist, daß vom Boden der Stecköffnung ein aufrechtstehender Zapfen ausgeht, daß der Zapfen mit einer auch den Grundkörper durchsetzenden Bohrung versehen ist, daß der Ergänzungskörper mit einem rohrförmigen Ansatz ausgebildet ist, der den Zapfen übergreift und sich auf dem Boden der Stecköffnung abstützt und daß in die Bohrung eine den Grundkörper durchsetzende Schraube als Befestigungselement eingedreht ist, mittels der die Festlegung des Ergänzungskörpers am Grundkörper wie auch die Festlegung des Lagerböckchens an der Fahrzeugkarosserie erfolgt, wobei zwischen dem Zapfen und dem rohrförmigen Ansatz die als Schraubendruckfeder ausgeführte Feder angeordnet ist, die sich mit ihrem einen Ende an Anschlägen im Innern des rohrförmigen Ansatzes und mit ihrem anderen Ende am Kopf der Schraube abstützt.

Mit Vorteil kann weiterhin vorgesehen sein, daß der Grundkörper mit dem Ergänzungskörper als einstückiges Kunststoff-Spritzgußteil ausgeführt ist, mit einer Lasche als Verbindungsglied und einem Filmscharnier in der Lasche als Klappgelenk.

Durch die erfindungsgemäßen Maßnahmen und insbesondere durch das Federsystem ist ein Gegenlagerböckchen für eine Fahrzeugsonnenblende geschaffen, das ein problemloses Ein- und Ausrasten der Sonnenblendenachse erlaubt, und zwar bei besonders niedrigen Temperaturen ebenso wie bei besonders hohen, das eine Temperatur unabhängige, stets gleichbleibende Haltekraft gewährleistet und das darüber hinaus einen Ausgleich von Fertigungstoleranzen ermöglicht.

Ein Ausführungsbeispiel der Erfindung wird im folgenden anhand der Zeichnungen näher erläutert, und es zeigen:
- Fig. 1: eine Draufsicht auf das Lagerböckchen,
- Fig. 2: einen Schnitt folgend der Linie II - II in Fig. 1 mit einer sich vor der Lageröffnung befindenden Sonnenblendenachse,
- Fig. 3: den gleichen wie in Fig. 2 gezeigten Schnitt, wobei sich aber die Sonnenblendenachse in der Lageröffnung befindet,
- Fig. 4: einen Schnitt etwa folgend der Linie IV - IV in Fig. 3 und
- Fig. 5: eine Explosivdarstellung des Lagerböckchens vor dem Zusammenbau.

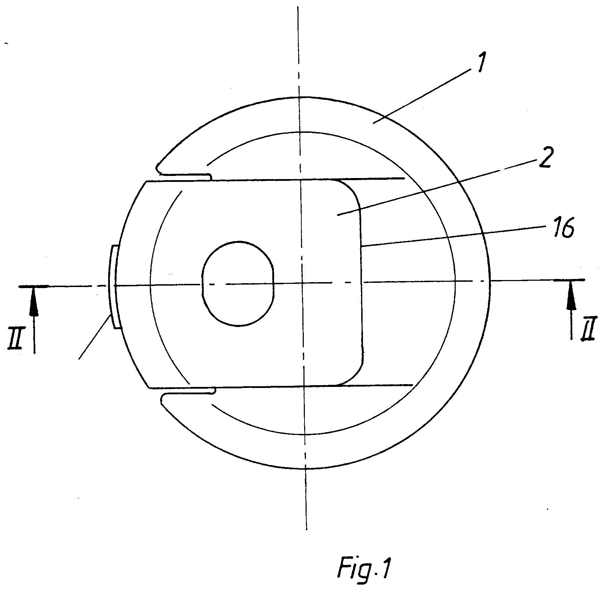

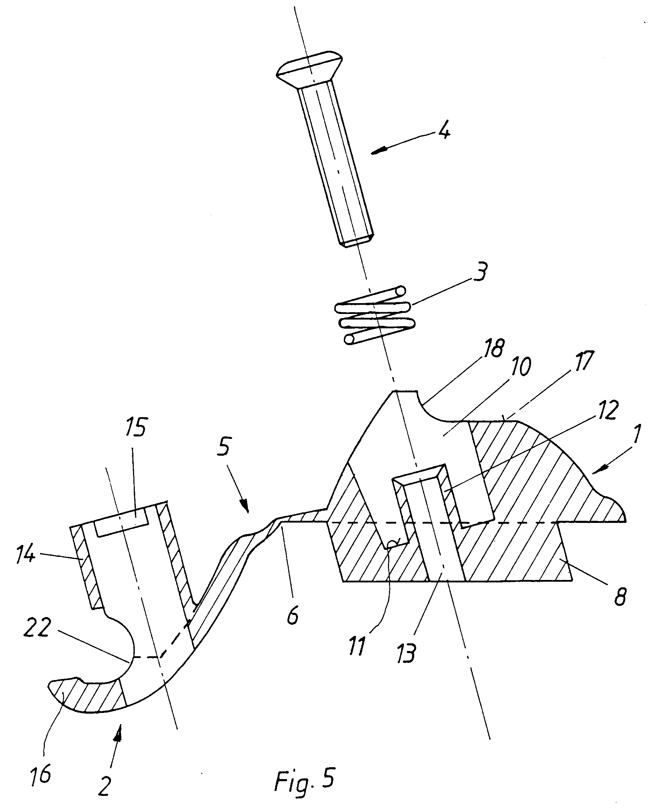

Das neue Lagerböckchen besteht aus einem Grundkörper 1, einem damit einstückig ausgebildeten Ergänzungskörper 2, einer Feder 3 und einer Schraube 4. Als Verbindungsglied zwischen dem Grundkörper 1 und dem Ergänzungskörper 2 dient eine Lasche 5. Eine die Lasche 5 querende Materialeinschnürung bildet ein Filmscharnier 6 als Klappgelenk, womit es ermöglicht wird, den Ergänzungskörper 2 aus seiner Ausgangslage nach Fig. 5 in seine Gebrauchslage nach Fig. 1 - 4 zu klappen. Das aus Grundkörper 1 und Ergänzungskörper 2 gebildete Lagerböckchen besteht aus einem einstückigen Kunststoff-Spritzgußteil.

Der Grundkörper 1 ist mit einem sich an einer Fahrzeugkarosserie 7 abstützenden Stützzapfen 8 ausgebildet, der gegenüber der Grundkörperkontur zurückspringt. Der dadurch gebildete Umlaufflansch 9 stützt sich gegen ein nicht dargestelltes Verkleidungselement, wie einen Fertighimmel ab. Von der dem Stützzapfen 8 abgewandten Seite des Grundkörpers 1 her geht eine Stecköffnung 10 aus, die einen Boden 11 und einen vom Boden 11 ausgehenden aufrechtstehenden Zapfen 12 in etwa zentrischer Anordnung aufweist. Der Zapfen 12 ist mit einer auch den Grundkörper 1 bzw. dessen Stützzapfen 8 durchsetzenden Bohrung 13 versehen.

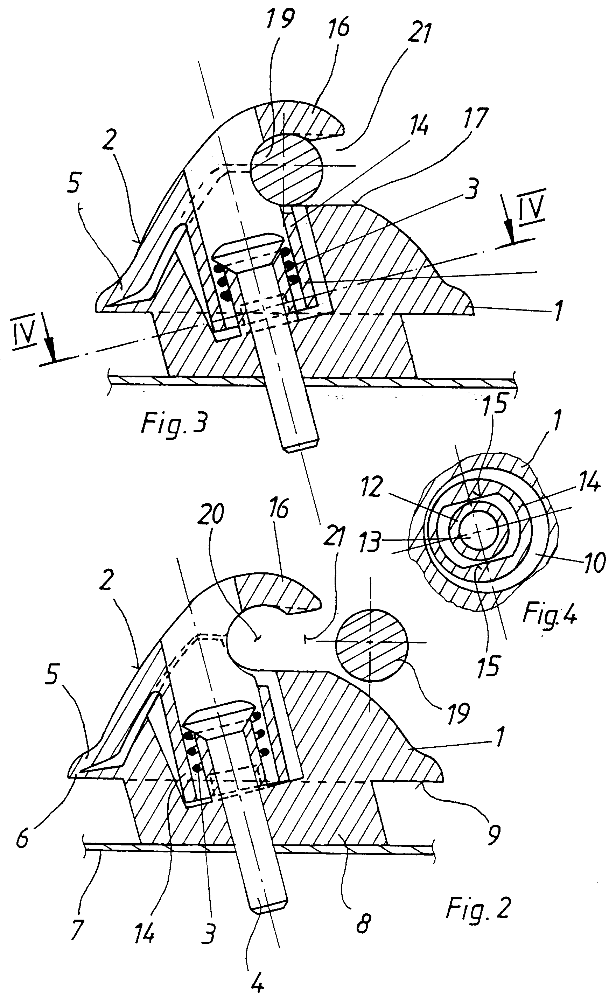

Der Ergänzungskörper 2 weist zunächst einen rohrförmigen Ansatz 14 auf, dessen Öffnung den Ergänzungskörper 2 durchsetzt. Am freien Endbereich des Ansatzes 14 sind innenseitige Anschläge 15 angeformt. Der Ansatz 14 wird der Lasche 5 gegenüberliegend von einem Arm 16 überragt. Nach dem Zusammenklappen von Grundkörper 1 und Ergänzungskörper 2 wirkt dieser Arm 16 mit einer einen zweiten Arm 17 bildenden Fläche, die in eine Kehle 18 übergeht, zusammen (Fig. 2 und 3), so daß sich für eine Sonnenblendenachse 19 ein in einer hinterschnittenen Lageröffnung 20 mündender Einführschlitz 21 ergibt. Die hinterschnittene Lageröffnung 20 wird also gebildet durch die Kehle 18 und durch die Hohlkehle 22 im Übergangsbereich vom Ansatz 14 zum Arm 16.

Der Zusammenhalt der zusammengeklappten Bauteile, nämlich Grundkörper 1 und Ergänzungskörper 2 wird gesichert durch die Feder 3, bei der es sich um eine Schraubendruckfeder handelt und durch die Schraube 4, die sich in der Wandung der Bohrung 13 ein Gewinde schneidet und zudem in die Fahrzeugkarosserie 7 einschraubbar ist. Die Feder 3 umgreift den Zapfen 12 und stützt sich mit einem Ende an den Anschlägen 15 und dem anderen Ende am Schraubenkopf ab. Durch die Feder 3 kann der Arm 16 beim Einstecken der Sonnenblendenachse 19 in die Lageröffnung 20 ebenso zurückweichen wie beim Herausziehen derselben. Die gegen die Feder 3 aufzubringende Kraft ist immer gleich groß, auch bei erheblichen Temperaturschwankungen, so daß das neue Lagerböckchen den technischen Anforderungen bei einfacher und kostengünstiger Herstellbarkeit vollauf gewachsen ist.

Es versteht sich, daß die zum Durchführen von Schraube 4 und Feder 3 erforderliche Öffnung im Ergänzungskörper 2 durch einen Deckel auf Wunsch hin verschlossen werden kann, etwa nach der Lehre der EP 0 005 146 B1.

## Patentansprüche

1. Lagerböckchen für Fahrzeugsonnenblenden, welches zwei eine Sonnenblendenachse (19) klammerartig umgreifende Arme (16, 17) aufweist, deren einander zugewandten Seiten eine hinterschnittene Lageröffnung (20) für die Sonnenblendenachse (19) und einen deren wiederholtes Einstecken in die Lageröffnung (20) ermöglichenden Einführschlitz (21) bilden, wobei der erste Arm (17) an einem Grundkörper (1) und der zweite Arm (16) an einem damit über ein Befestigungselement verbundenen Ergänzungskörper (2) ausgebildet ist und wobei sich zwischen dem Grundkörper (1) und dem Ergänzungskörper (2), die gemeinsam das Lagerböckchen bilden, eine Feder (3) befindet, dadurch gekennzeichnet, daß der Grundkörper (1) eine Stecköffnung (10) für den Ergänzungskörper (2) aufweist, daß vom Boden (11) der Stecköffnung (10) ein aufrechtstehender Zapfen (12) ausgeht, daß der Zapfen (12) mit einer auch den Grundkörper (1) durchsetzenden Bohrung (13) versehen ist, daß der Ergänzungskörper (2) mit einem rohrförmigen Ansatz (14) ausgebildet ist, der den Zapfen (12) übergreift und sich auf dem Boden (11) der Stecköffnung (10) abstützt und daß in die Bohrung (13) eine den Grundkörper (1) durchsetzende Schraube (4) als Befestigungselement eingedreht ist, mittels der die Festlegung des Ergänzungskörpers (2) am Grundkörper (1) wie auch die Festlegung des Lagerböckchens an der Fahrzeugkarosserie erfolgt, wobei zwischen dem Zapfen (12) und dem rohrförmigen Ansatz (14) die als Schraubendruckfeder ausgeführte Feder (3) angeordnet ist, die sich mit ihrem einen Ende am Anschlag (15) im Innern des rohrförmigen Ansatzes (14) und mit ihrem anderen Ende am Kopf der Schraube (4) abstützt.

2. Lagerböckchen nach Anspruch 1, dadurch gekennzeichnet, daß der Grundkörper (1) mit dem Ergänzungskörper (2) als einstückiges Kunststoff-Spritzgußteil ausgeführt ist, mit einer Lasche (5) als Verbindungsglied und einem Filmscharnier (6) in der Lasche (5) als Klappgelenk.

## Claims

1. Bearing support for vehicle sun visors, which has two arms (16, 17), which engage around a sun-visor spindle (19) in a clamp-like manner and of which the mutually facing sides form an undercut bearing opening (20) for the sun-visor spindle (19), and an insertion slit (21) which makes it possible for said spindle to be inserted repeatedly into the bearing opening (20), the first arm (17) being formed on a basic body (1) and the second arm (16) being formed on a supplementary body (2), which is connected to the basic body via a fastening element, and a spring (3) being located between the basic body (1) and the supplementary body (2), which together form the bearing support, characterized in that the basic body (1) has an insertion opening (10) for the supplementary body (2), in that an upright stub (12) extends from the base (11) of the insertion opening (10), in that the stub (12) is provided with a bore (13), which also passes through the basic body (1), in that the supplementary body (2) is designed with a tubular extension (14) which engages over the stub (12) and is supported on the base (11) of the insertion opening (10), and in that a screw (4), which passes through the basic body (1), is screwed into the bore (13) as a fastening element and secures the supplementary body (2) on the basic body (1) and also secures the bearing support on the vehicle body, the spring (3), which is designed as a helical compression spring, being arranged between the stub (12) and the tubular extension (14) and being supported, by one end, on the stop (15) in the interior of the tubular extension (14) and, by its other end, on the head of the screw (4).

2. Bearing support according to Claim 1, characterized in that the basic body (1) and the supplementary body (2) are designed as an integral plastic injection moulding, with a link (5) as connecting element and with a film hinge (6) in the link (5) as swing-action joint.

## Revendications

1. Support de palier d'un pare-soleil pour véhicules, qui présente deux bras (16, 17) entourant en tenaille un axe de pare-soleil (19), dont les faces tournées l'une vers l'autre forment une ouverture de support entaillée (20) pour l'axe de pare-soleil (19) et une fente d'entrée (21) permettant l'introduction répétée de celui-ci dans l'ouverture de support (20), dans lequel le premier bras (17) est formé sur un corps de base (1) et le second bras (16) sur un corps complémentaire (2) assemblé à celui-ci par un élément de fixation et dans lequel un ressort (3) se trouve entre le corps de base (1) et le corps complémentaire (2) qui forment ensemble le support de palier, caractérisé en ce que le corps de base (1) présente une ouverture d'engagement (10) pour le corps complémentaire (2), en ce qu'un tourillon dressé (12) part du fond (11) de l'ouverture d'engagement (10), en ce que le tourillon (12) est pourvu d'un alésage (13) traversant également le corps de base (1), en ce que le corps complémentaire (2) est formé avec une douille tubulaire (14), qui coiffe le tourillon (12) et prend appui sur le fond (11) de l'ouverture d'engagement (10) et en ce qu'une vis (4) traversant le corps de base (1) est vissée dans l'alésage (13) en qualité d'élément de fixation, au moyen de laquelle la fixation du corps complémentaire (2) au corps de base (1) ainsi que la fixation du support de palier à la carrosserie du véhicule sont réalisées, le ressort (3) constitué par un ressort hélicoïdal comprimé étant disposé entre le tourillon (12) et la douille tubulaire (14), et prenant appui par sa première extrémité sur la butée (15) à l'intérieur de la douille tubulaire (14) et par son autre extrémité sur la tête de la vis (4).

2. Support de palier selon la revendication 1, caractérisé en ce que le corps de base (1) est réalisé en une seule pièce en matière plastique moulée par injection avec le corps complémentaire (2), avec une patte (5) constituant l'organe de liaison et une charnière plate (6) dans la patte (5), constituant une articulation pliante.
